# EUROPEAN PATENT SPECIFICATION

(11) **EP 0 543 464 B1**
(45) Date of publication and mention of the grant of the patent: **11.06.1997**
(21) Application number: 92203554.8
(22) Date of filing: 19.11.1992
(51) Int. Cl.: A01B 73/00

(54) **A soil cultivating machine**
Bodenbearbeitungsmaschine
Machine à travailler le sol

(30) Priority: 22.11.1991 NL 9101968
(43) Date of publication of application: 26.05.1993
(73) Proprietor: C. van der Lely N.V., NL-3155 PD Maasland (NL)
(72) Inventor: Bom, Cornelis Johannes Gerardus, NL-3181 VC Rozenburg (NL); Denkers, Hendrikus Lambertus, NL-3155 BC Maasland (NL)
(74) Representative: Mulder, Herman

(56) References cited:
- EP-A- 0 094 442
- EP-A- 0 108 727
- EP-A- 0 350 513
- DE-A- 2 219 971
- DE-A- 3 538 601
- FR-A- 2 443 794
- NL-A- 8 700 200

## Description

The invention relates to a rotary harrow comprising a box-like frame beam wherein power driven soil working members are accommodated and which is sustainable from the ground by means of a roller connected to the frame beam by means of arms extending in the direction of operative travel and arranged near each end portion of said frame, the machine comprising a tractor-couplable frame, comprising a trestle and having a transport axle extending at least predominantly in said direction of operative travel and movable in height relative to said frame and around which axle at least one wheel is arranged rotatably, which wheel, in the transport position, is disposed at least for its largest part on the outer side of an imaginary vertical plane of contact with the frame periphery, which plane extends in the direction of operative travel.

A machine of this kind is known from EP-A-0 094 442. In the known machine, the wheel pair by means of which the machine is transported, must be manually uncoupled and removed from the machine, or be manually pushed upwardly and then be locked. This known construction has the disadvantage that in use it may cause back troubles to the user and that the procedure of coupling and uncoupling before and after operation of the machine is annoying and time consuming. The present invention seeks to overcome such problems in a constructively favourable manner.

To that end, the machine is provided with an operating element, by means of which the wheel is moved around a pivot pin for the benefit of an operative mode of the machine, to a position wherein the wheel at least for its largest part is arranged at the inner side of the plane of contact, the operating element being connected to a strut extending between an upper portion of the trestle and an end portion of said frame beam, and said pivot pin being located in a raised position, above the uppermost position of a roller arm.

A suchlike construction is favourable in that the upward movement of the wheel-axle assembly may be realized from the tractor seat, i.e. with less time consumption and very conveniently. Also, the presence of a strut assures the alignment of the machine frame and the cam wheels of the drive therein, which is particularly favourable when the wheel-axle assembly is mounted to an end portion of machines with a large working width. In this respect, the operating element, which may conveniently be embodied by a hydraulical cylinder, is connected between the strut and a part of the wheel-axle assembly, so that the forces acting on the machine during the deflection of the wheel-axle assembly are absorbed in a favourable manner. The construction according to the invention, taken as a whole, also has the advantage that the pivot pin is brought in a raised position, so that the proper functioning of the frame-roller assembly of the machine, in which upward movement of the frame relative to the roller may be allowed, is assured.

More particularly, according to the invention, a wheel is pivotal to and lockable at a height above the lower boundary of the frame, so that, during operation of the machine, the wheels are amply removed from the soil. According to the invention, a still more advantageous construction is obtained when a wheel can be positoned at least for its larger part on the inner side of the plane of contact. This has the advantage that any obstacles, for example on the edge of a plot to be worked, can be passed without any hindrance. The construction with the aid of which the said arrangement of a wheel can be obtained is such that, according to a further feature of the invention, the transport axle is pivotal through 180° about the pivot shaft, by means of which a support is pivotal relative to the frame. The said construction is characterized in that one of the ends of the adjusting cylinder is connected to one of two pivotably interconnected rods, one of which is pivotably connected to the frame and the other one is pivotably connected to a support for the wheel axle.

In accordance with a further feature of the invention, for the purpose of being coupled to a tractor, the frame is provided at the peripheral side opposite the peripheral side located near and parallel to the wheel axle with a pole which is formed from two parts which are pivotal relative to each other, one part of which is rigidly connected to the frame within the frame periphery and the other part is adjustable to and lockable inside the frame periphery in the operating position and, in the transport position, is predominantly adjustable to and lockable outside the frame periphery. Such a construction has the advantage that the pole can be arranged inside the periphery of the frame as closely as possible to an end, so that in operation a sufficient counterweight is created relative to the side at which the wheel pair is disposed. This promotes a smooth operation of the machine. In order to realise such a construction, the pivot shaft of the pole is directed at least approximately horizontally and disposed approximately perpendicularly therebelow is a locking means for locking the pole parts relative to each other.

The said structural features can be applied in a particularly advantageous manner when the machine is a p.t.o.-driven rotary harrow having a whole frame and being provided with rotors with tines. According to the invention, the said constructions are particularly suitable for machines in excess of 5 metres, and preferably 6 metres. The frame then includes a trestle for coupling it to a tractor and struts which during operation are each predominantly arranged transversely to the direction of operative travel between the trestle and one end of the frame, whilst the pole, the adjusting cylinder and the pivot point for a support of a wheel axle are attached to a strut. In addition, the machine may include a roller and may be combined with a seed drill.

More in particular, in the transport position, the machine is supported, on both sides of a plane of gravity in the widthwise direction of the machine, by one or more wheels. In accordance with a still further feature of the invention, the pivot shaft for the supports is located, taken in a direction transversely to the direction of operative travel, during operation outside the path through which an outermost rotor tine rotates, but within the working range of the machine. In addition, it is possible in accordance with the invention for that end of a support that is remote from the wheel to co-operate with a locking member present on the frame. The adjusting cylinder is also provided with a locking element which can act on a complementary locking element on one of the rods, to which the piston rod of the adjusting cylinder is connected. Then, a locking element can be moved from its locking state from the seat of a tractor coupled to the machine. An advantageous detail of the design is the fact that the adjusting cylinder and the supports are connected to the frame via a carrier structure. This carrier structure is constituted by a triangular framework and is connected to a strut. In accordance with a still further detail, at least one wheel is disposed outside the centre of gravity of the roller.

For a better understanding of the invention and to show how the same may be carried into effect, reference will now be made, by way of example, to the accompanying drawings, in which:
Figure 1 is a front view of the machine in accordance with the invention;

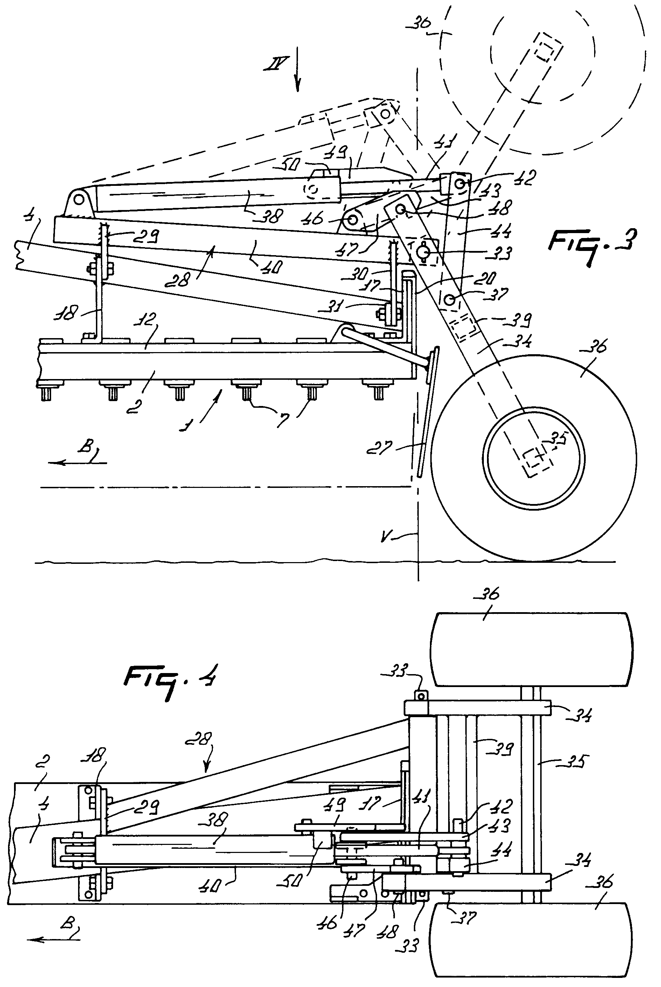

Figure 2 is a plan view taken in the direction of arrow II in Figure 1;
Figure 3 shows, to an enlarged scale, a portion of the machine taken in the direction of arrow III in Figure 2, and
Figure 4 is a plan view taken in the direction of arrow IV in Figure 3.

Corresponding components in the drawings are denoted by the same reference numerals. Moreover, the invention is in no way limited to the embodiments illustrated in the drawings and described here; they only serve as an illustration of the inventive idea.

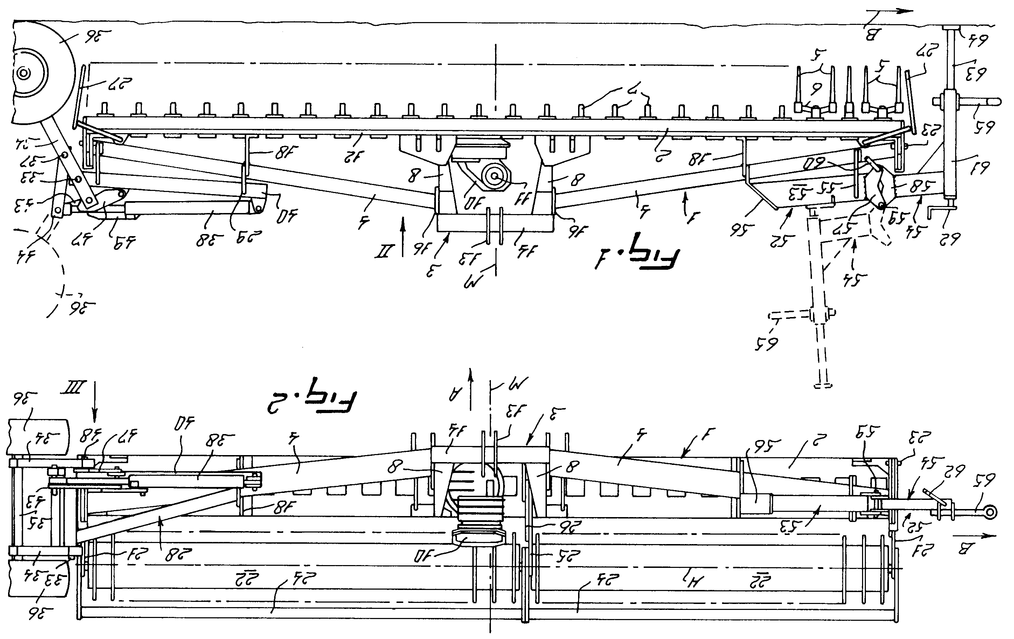

Figure 1 is a front view of a p.t.o.-driven rotary harrow comprising a frame 1 having a box-like frame beam 2 and, disposed in the midway point thereof, a trestle 3 and struts 4. The struts 4 extend in the lateral direction, i.e. transversely to the direction of operative travel A, between the trestle 3 and one end of the machine and have a height of 10 cms. and a width of 20 cms. At its ends, the p.t.o.-driven rotary harrow is provided with component parts of an implement, with the aid of which the machine can be transported in the lateral direction B. The p.t.o.-driven rotary harrow is six metres wide and includes soil working members 6 which are provided with tines 5 and are each supported via an upwardly directed shaft 7 in the box-like frame beam 2 and are in driving connection with each other by means of gearwheels arranged on the shafts 7 in the frame beam 2. Approximately halfway the frame portion 2, between the legs 8 of the trestle 3 there is provided a gear box 10, from whose front end a stub axle 11 projects for connection to the power take-off shaft of a tractor. The drive from a tractor is transferred in the gear box 10 to the extension of the shaft of one of the soil working members via bevel gearwheels.

The frame beam 2 for the gearwheels has a lower portion which in a cross-sectional view is in the shape of a trough and an upper portion which serves as a cover. In a cross-section view, the upright walls of the trough-like portion have a horizontally flanged portion, via which portion the cover and the trough-like portion are screwed together. More to the outside, still in a cross-sectional view, both the cover and the trough-like portion of the beam are provided with a vertically folded-over edge 12. This folded-over edge reinforces the beam and prevents it from sagging. The trestle 3 is fitted with three pairs of lugs for coupling to the three-point lifting hitch of a tractor. The trestle 3 is assembled from two interspaced legs 8, made of folded-over sheet steel, whose outer side extends in the vertical direction and whose bottom side extends along the entire frame beam 2 in the direction of operative travel A. From the trailing side of the frame beam 2, the legs 8 extend obliquely upwardly and forwardly. At their upper sides, the legs 8 are interconnected by a top rod 14. The struts 4 are screwed to the upper ends of the legs 8 just below the top rod 14 via a plate 16 welded to the head end of a strut 4. At the outermost head ends, i.e. the ends remote from the trestle 3, the struts 4 are each provided with a plate 17 which is welded in the vertical direction and in the direction of travel and is screwed to the frame beam 2 via a flanged portion. Taken in a direction from the outside to the inside, there is connected, just beyond the shaft of the fifth rotor, i.e. about 115 cms from the end of the frame beam 2, in the direction of operative travel A, a vertical plate-like support 18 between a strut 4 and the frame beam 2. The support 18 envelopes the front and rear sides of a strut 4 and its bottom side fully extends along the frame beam 2. The upright portion of the plate 17 at the outermost head face end of a strut 4, slopes from the leading side of the machine, i.e. the side provided with the lugs for coupling to a tractor, upwards to the rear and at the rear side has its upper end connected to a folded portion of an end plate 20 which closes the box-like frame beam 2. The spacing in the horizontal direction between the two plates 17, 20 amounts to approximately 1 cm, i.e. the thickness of a plate from which the arms 21 for a roller 22 disposed at the rear side of the frame have been made. At the leading side of the frame beam 2, the arms 21 are each pivotably connected to an end plate 20 via a bolt 23 which extends horizontally and transversely to the direction of operative travel A. The motion of an arm 21 is thus guided by the end plate 20 and the upright portion of the head end plate 17 of the strut 4. At its rear side, an arm 21 is connected in known manner to what is commonly denoted a packer roller 22, which comprises a carrier 24 with scrapers for keeping the roller clean. In the present embodiment, the roller 22 is assembled from two parts, the facing ends of which are supported near one of the legs 8 of the trestle by an intermediate arm 25 which is pivotal in similar manner as the arms at the ends of the frame beam 2. In a manner known per se, the intermediate arm is provided with a floating structure formed by a guide arm 26 which is connected to the trestle 8 and provided with a slotted hole and acts on the intermediate arm 25 approximately halfway its length. A ground guide plate 27 is disposed in a manner known per se at each end of the frame.

That part of the transport implement that is provided with wheels is assembled around a triangular frame 28, the base of which extends horizontally and parallel to the direction of operative travel A and an other side of which is located above the frame 1 in the direction of transport B at an angle with the horizontal. The frame 28 is connected to the frame via two vertically arranged supporting plates 29, 30 extending in the direction of operative travel A. The inner support 29 is bolted to the support 18 between the strut 4 and the box-like frame beam 2. The outer support 30 for the frame 28 is bolted to two lugs 31 at the leading and trailing ends of the strut 4. The upper side of the plate 30 extends in height to the upper side of the frame 28 and extends in the direction of operative travel A of the frame beam arranged in the transport direction B to as far as the sloping frame beam. This construction can absorb forces to a sufficient degree to prevent fracture by torsion about an axis extending in the direction of transport B. In a plan view, the carrier frame 28 is equipped in an area bounding on the ends of the frame 1 with pins 33 extending in the direction of operative travel A. A pair of supports 34 for a wheel axle 35 for mounting wheels 36 are provided about the pins 33. At their ends, the supports 34 are provided with a square hole, through which the wheel axle 35, constituted by a square beam, is inserted. The wheels 36 are fitted on the ends of the wheel axle 35. The entire assembly formed by the supports 34 for the wheels, wheel axle 35 and wheels 36 can be moved hydraulically about the pins 33 with the aid of a hydraulic adjusting cylinder 38 attached at the upper end to the beam 40 of the frame 28, which beam extends in the direction of transport B. The piston rod 41 of the cylinder 38 acts on a pivot pin 42 which interconnects a system of two levers 43, 44. In the transport position, the pivot pin 42 is, in a front view as shown in Figure 1, placed on the outside of the pivot pins 33. One lever 43 of the system is connected to the frame 28 via a pivot pin 46 arranged in the direction of operative travel A and the other lever 44 acts, at approximately 1/5th of the distance between the pivot pin 33 and the centre of the wheels 36, on a pin 37 which at one side is supported by a support 34 for the wheels 36 and at the other side by a (non-shown) lug provided at a connecting beam 39 between the supports 34. Such a construction renders it possible for the supports 34 for the wheels 36 to be rotated through more than 180°, so that the axle together with the wheels can be moved as far as possible towards the centre of the machine in an operating condition. This is advantageous for the weight distribution of the p.t.o.-driven rotary harrow during operation. Using such a construction, it is also possible to adjust the wheels 36 that far to the inside that they are positioned, at least for the largest part, at the inside of a plane extending vertically and in the direction of operative travel A. However, in the present embodiment shown in the drawings, the length of the piston rod 41 has been chosen such that, for the operating position, the wheels 36 cannot be pivoted to a position further than the position in which the wheels are perpendicularly over the position during transport. This has the advantage that the machine can arrive faster in the operating position from the transport position.

For the purpose of locking the supports 34 of the wheels 36 in a transport position, the pivot pin 46, by means of which the lever 43 is connected to the frame 28, is further provided with a catch hook 47. On moving the wheels 36 into the transport position, the catch hook 47 drops over a pin 48 provided at the leading side of the foremost support for the road wheels 36 and near the free end thereof. The catch hook 47 can be lifted from the driver's seat by means of a cord which is threaded via the trestle and is connected to the catch hook 47. The supports 34 for the wheels can be locked and unlocked in a similar manner in the operating position. To that end, pivotal catch hooks 49 are provided on the outermost end of the adjusting cylinder 38 at both the leading and trailing ends. These catch hooks are interconnected via a rod 50 which reaches over the upper side of the cylinder. Such a design prevents a catch hook 49 from being moved to the vertical position.

The portion of the transport implement at the end opposite the end of the road wheels provides a pole 52 which consists of two portions 53, 54 which are pivotal relative to each other. An inner portion 53, consisting of a hollow beam having an upright rectangular profile, is rigidly connected to the frame 1 via supporting plates 55, 56. For that purpose, an outwardly and upwardly directed supporting plate 55, which extends in the direction of operative travel A, is screwed to lugs 31 provided at the leading and trailing ends of a strut 4. An inner supporting plate 56 is bolted in a similar manner to the supporting plates 18 between strut 4 and box-like frame beam 2. At its outermost end, the rigid portion 53 of the pole 52 is provided with a fork 57, in the interior of which fits a fork of the outermost pole portion 54. Apertures, through which a pivot pin 59 is inserted, are present in the top portion of the two forks 57, 58. The lower portions of the forks are also provided with apertures, through which can be passed a pin 60 for locking the pole portions 53, 54 relative to each other. In a plan view, both forks 57, 58 are located within the periphery of the box-like frame beam 2. The outer pole portion 54 is further formed by a beam which is of a smaller bulk than the inner pole and in the transport position is arranged in the extension of the inner pole. Present at the end of the outer pole is a vertically directed hollow beam 61 having a square profile, a base member 64 being disposed capably of sliding with the aid of a threaded spindle 62 in this hollow beam. The bottom side of the vertical beam is fitted with an eye 65, by means of which the harrow can be coupled to the hook of a tractor. On coupling, the height of the eye 65 can be set by turning the spindle. For the operating position, the forks 57, 58 can be unlocked and the outer pole portion 54 is folded on top of the inner pole portion 53. Such a pole construction has the advantage that the weight of the portion of the transport implement at the other end of the p.t.o.-driven rotary harrow is slightly compensated for, so that in operation the harrow is in a better balance.

In view of a proper weight distribution and a stable road behaviour during transport, one of the wheels 36 is arranged at least for the larger part outside the centre line of the roller 22. In addition, the rear side of the trestle 3 is provided with means, via which a second implement, e.g. a seed drill, can be coupled to the machine. Consequently, it is imperative that the road wheels 36 are so arranged during transport that they are not located on the inside of an imaginary plane of contact V with the periphery of the frame 1, which plane extends in the vertical direction and in the direction of operative travel A. In contrast therewith, it is advantageous during operation, more specifically with a view to any obstacles on the edges of a plot, that the wheels do not or to the least possible extent reach to beyond this plane V.

## Claims

1. A rotary harrow (2) comprising a box-like frame beam (2) wherein power driven soil working members (6) are accommodated and which is sustainable from the ground by means of a roller (22) connected to the frame beam (2) by means of arms (21) extending in the direction of operative travel and arranged near each end portion of said frame (2), the machine comprising a tractor-couplable frame (1, 2, 3, 4), comprising a trestle (3) and having a transport axle (35) extending at least predominantly in said direction of operative travel and movable in height relative to said frame (1, 2, 3, 4) and around which axle (35) at least one wheel (36) is arranged rotatably, which wheel (36), in the transport position, is disposed at least for its largest part on the outer side of an imaginary vertical plane of contact (V) with the frame periphery, which plane extends in the direction of operative travel (A), characterized in that the machine is provided with an operating element (38), by means of which the wheel (36) is moved around a pivot pin (33) for the benefit of an operative mode of the machine, to a position wherein the wheel (36) at least for its largest part is arranged at the inner side of the plane of contact (V), the operating element (38) being connected to a strut (4) extending between an upper portion of the trestle (3) and an end portion of said frame beam (2), and said pivot pin (33) being located in a raised position, above the uppermost position of a roller arm (21).

2. A rotary harrow as claimed in claim 1, characterized in that the axle (35) is pivotal at least through approximately 180°.

3. A rotary harrow as claimed in claim 1 or 2, characterized in that one of the ends of the operating element (38) is connected to one of two pivotably inter-connected levers (43, 44), one (43) of which is pivotably connected to the frame (1, 2, 3, 4) and the other one (44) is pivotably connected to a support (34) for the axle (35).

4. A rotary harrow as claimed in any one of the preceding claims, characterized in that the working width of the machine exceeds approximately 5 metres and is preferably 6 metres.

5. A rotary harrow as claimed in any one of the preceding claims, characterized in that the pole (52) and the pivot pin (33) are attached to a strut (4).

6. A rotary harrow as claimed in any one of the preceding claims, characterized in that the machine is a power take-off driven rotary harrow, and that the machine may include a roller (22) and may be combined with a seed drill.

7. A rotary harrow as claimed in any one of the preceding claims, characterized in that the pivot pin (33) is located, taken in the longitudinal direction of the frame, outside the path through which an outermost rotor tine (5) rotates, but within the working range of the machine.

8. A rotary harrow as claimed in any one of the preceding claims, characterized in that that end of a support (34) that is remote from the wheel (36) can co- operate with a locking member (47) present on the frame (1, 2, 3, 4).

9. A rotary harrow as claimed in any one of the preceding claims, characterized in that the operating element (38) is constituted by an adjusting cylinder, which adjusting cylinder may be provided with a locking element (49) which acts on a complementary locking element (42) on one of the levers (43, 44), to which the piston rod of the adjusting cylinder is connected.

10. A rotary harrow as claimed in any one of the preceding claims, characterized in that a locking element (47, 49) can be moved from its locking state from the seat of a tractor coupled to the machine.

11. A rotary harrow as claimed in any one of the preceding claims, characterized in that the operating element (38) and the supports (34) are connected to the frame (1, 2, 3, 4) via a carrier structure (28), which carrier structure (28) is constituted by a triangular framework and is connected to a strut (4).

## Patentansprüche

1. Kreiselegge (2) mit einem Kastenbalken (2), in dem angetriebene Bodenbearbeitungsglieder (6) gelagert sind, und der auf dem Boden mittels einer Walze (22) abzustützen ist, die mit dem Kastenbalken (2) mittels Armen (21) verbunden ist, die sich in Arbeitsrichtung erstrecken und nahe jedem Ende des Rahmens (2) angeordnet sind, wobei die Maschine einen an einen Schlepper anzuschließenden Rahmen (1, 2, 3, 4) hat, der einen Anbaubock (3) sowie eine Transportachse (35) aufweist, die sich zumindest überwiegend in Arbeitsrichtung erstreckt und relativ zu dem Rahmen (1, 2, 3, 4) höhenverstellbar ist, und auf der mindestens ein Rad (36) drehbar angeordnet ist, das in der Transportlage zumindest überwiegend außerhalb einer in Arbeitsrichtung (A) stehenden vertikalen Begrenzungsebene (V) der Peripherie des Rahmens angeordnet ist,
dadurch gekennzeichnet, daß die Maschine ein Betätigungsglied (38) aufweist, mittels dessen das Rad (36) zur Einstellung einer Arbeitslage der Maschine um eine Gelenkachse (33) in eine Position bewegt wird, in der es zumindest überwiegend auf der Innenseite der Begrenzungsebene (V) angeordnet ist, wobei das Betätigungsglied (38) mit einer Strebe (4) verbunden ist, die zwischen einem oberen Teil des Anbaubockes (3) und einem Ende des Kastenbalkens (2) angeordnet ist, und wobei die Gelenkachse (33) in angehobener Lage höher liegt als ein Walzentragarm (21) in dessen oberster Position.

2. Kreiselegge nach Anspruch 1,
dadurch gekennzeichnet, daß die Achse (35) mindestens um etwa 180° schwenkbar ist.

3. Kreiselegge nach Anspruch 1 oder 2,
dadurch gekennzeichnet, daß das eine Ende des Betätigungsgliedes (38) mit einem von zwei schwenkbar verbundenen Hebeln (43, 44) verbunden ist, von denen der eine Hebel (43) mit dem Rahmen (1, 2, 3, 4) und der andere Hebel (44) mit einer Stütze (34) für die Achse (35) schwenkbar verbunden ist.

4. Kreiselegge nach einem der vorhergehenden Ansprüche,
dadurch gekennzeichnet, daß die Arbeitsbreite der Maschine mehr als etwa 5 Meter und vorzugsweise 6 Meter beträgt.

5. Kreiselegge nach einem der vorhergehenden Ansprüche,
dadurch gekennzeichnet, daß die Deichsel (52) und die Gelenkachse (33) an einer Strebe (4) angebracht sind.

6. Kreiselegge nach einem der vorhergehenden Ansprüche,
dadurch gekennzeichnet, daß die Maschine eine zapfwellenbetriebene Kreiselegge ist, eine Walze (22) aufweisen und mit einer Drillmaschine kombiniert werden kann.

7. Kreiselegge nach einem der vorhergehenden Ansprüche,
dadurch gekennzeichnet, daß die Gelenkachse (33) in Längsrichtung des Rahmens gesehen außerhalb des Bewegungsweges des äußersten Rotorzinkens (5), jedoch innerhalb der Arbeitsbreite der Maschine angeordnet ist.

8. Kreiselegge nach einem der vorhergehenden Ansprüche,
dadurch gekennzeichnet, daß das von dem Rad (36) abgewandte Ende einer Stütze (34) zum Zusammenwirken mit einem Verriegelungselement (47) ausgelegt ist, das an dem Rahmen (1, 2, 3, 4) vorhanden ist.

9. Kreiselegge nach einem der vorhergehenden Ansprüche,
dadurch gekennzeichnet, daß das Betätigungsglied (38) ein Stellzylinder ist, der mit einem Verriegelungselement (49) versehen sein kann, das mit einem komplementären Verriegelungselement (42) an einem der Hebel (43, 44) zusammenwirkt, mit denen die Kolbenstange des Stellzylinders verbunden ist.

10. Kreiselegge nach einem der vorhergehenden Ansprüche,
dadurch gekennzeichnet, daß ein Verriegelungselement (47, 49) vom Sitz eines mit der Maschine verbundenen Schleppers aus zu entriegeln ist.

11. Kreiselegge nach einem der vorhergehenden Ansprüche,
dadurch gekennzeichnet, daß das Betätigungsglied (38) und die Stützen (34) mit dem Rahmen (1, 2, 3, 4) über eine Tragkonstruktion (28) verbunden sind, die durch einen dreieckigen Rahmen gebildet und mit einer Strebe (4) verbunden ist.

## Revendications

1. Herse rotative (1) comprenant une poutre de châssis (2) en forme de caisson, dans laquelle sont logés des organes motorisés de travail du sol (6), qui peut être soutenue au-dessus du sol au moyen d'un rouleau (22) relié à la poutre de châssis (2) au moyen de bras (21) s'étendant dans le sens de marche du travail et disposés près de chaque partie terminale de ladite poutre de châssis (2), la machine comprenant un châssis (1, 2, 3, 4) pouvant être couplé à un tracteur, comprenant un chevalet (3) et ayant un essieu de transport (35) s'étendant au moins principalement dans ledit sens de marche du travail et mobile en hauteur par rapport audit châssis (1, 2, 3, 4) et autour duquel essieu (35) est montée rotative au moins une roue (36), laquelle roue (36) est disposée, en position de transport, au moins dans sa majeure partie, sur le côté extérieur d'un plan de contact vertical imaginaire (V) avec la périphérie du châssis, ce plan s'étendant dans le sens de marche (A) du travail,
**caractérisée** en ce que la machine est munie d'un élément actionneur (38) au moyen duquel la roue (36) est entraînée autour d'un pivot (33) à partir d'une position de travail de la machine, vers une position dans laquelle la roue (36) est disposée, au moins dans sa majeure partie, au côté intérieur du plan de contact (V), l'élément actionneur (38) étant relié à un étai (4) s'étendant entre une partie supérieure du chevalet (3), et ledit pivot (33) étant situé en une position relevée, au-dessus de la position la plus haute d'un bras (21) du rouleau.

2. Herse rotative selon la revendication 1, caractérisée en ce que l'essieu (35) peut pivoter sur environ 180°.

3. Herse rotative selon la revendication 1 ou 2, caractérisée en ce qu'une des extrémités de l'élément actionneur (38) est reliée à deux leviers (43, 44) articulés l'un avec l'autre, un (43) desquels est articulé sur le châssis (1, 2, 3, 4) et l'autre (44) est articulé sur un support (34) de l'essieu (35).

4. Herse rotative selon l'une quelconque des revendications précédentes, caractérisée en ce que la largeur de travail de la machine excède environ 5 mètres et est, de préférence, de 6 mètres.

5. Herse rotative selon l'une quelconque des revendications précédentes, caractérisée en ce que la perche (52) et le pivot (33) sont attachés à un étai (4).

6. Herse rotative selon l'une quelconque des revendications précédentes, caractérisée en ce que la machine est une herse rotative entraînée par une prise de force et en ce que la machine peut comporter un rouleau (22) et peut être combinée avec un semoir.

7. Herse rotative selon l'une quelconque des revendications précédentes, caractérisée en ce que le pivot (33) est situé, en étant vu dans le sens longitudinal du châssis, à l'extérieur du trajet de rotation d'une dent (5) du rotor situé le plus à l'extérieur, mais à l'intérieur de la zone de travail de la machine.

8. Herse rotative selon l'une quelconque des revendications précédentes, caractérisée en ce que l'extrémité d'un support (34) opposée à la roue (36) peut coopérer avec un organe de verrouillage (47) présent sur le châssis (1, 2, 3, 4).

9. Herse rotative selon l'une quelconque des revendications précédentes, caractérisée en ce que l'élément actionneur (38) est constitué par un vérin de réglage pouvant être muni d'un élément de verrouillage (49) qui agit sur un élément de verrouillage complémentaire (42) sur un des leviers (43, 44) auquel est reliée la tige de piston du vérin de réglage.

10. Herse rotative selon l'une quelconque des revendications précédentes, caractérisée en ce qu'un élément de verrouillage (47, 49) peut être dégagé de son état verrouillant à partir du siège d'un tracteur couplé à la machine.

11. Herse rotative selon l'une quelconque des revendications précédentes, caractérisée en ce que l'élément actionneur (38) et les supports (34) sont reliés au châssis (1, 2, 3, 4) par une structure porteuse (28), laquelle structure porteuse (28) est constituée par un cadre triangulaire et est reliée à un étai (4).
